# EUROPÄISCHE PATENTSCHRIFT

(11) **EP 1 070 905 B1**
(45) Veröffentlichungstag und Bekanntmachung des Hinweises auf die Patenterteilung: **06.10.2004**
(21) Anmeldenummer: 00115716.3
(22) Anmeldetag: 21.07.2000
(51) Int. Cl.: F16L 55/28, F16L 55/26

(54) **Vorrichtung zum Durchführen von Kanalarbeiten**
Device for carrying out work in a pipe
Dispositif pour travailler à des canalisations

(30) Priorität: 21.07.1999 DE 19934241
(43) Veröffentlichungstag der Anmeldung: 24.01.2001
(73) Patentinhaber: Kanaltechnik Geiger& Kunz GmbH & Co. KG, 87527 Sonthofen (DE); EST Einlaufsanierungstechnik GmbH, 88074 Meckenbeuren (DE)
(72) Erfinder: Dietrich, Herbert, 88074 Meckenbeuren (DE)
(74) Vertreter: Raue, Reimund, Dipl.-Ing.

(56) Entgegenhaltungen:
- DE-A- 3 803 274
- DE-A- 4 229 787
- DE-C- 4 401 758
- DE-C- 4 417 428
- DE-U- 29 700 193

## Beschreibung

Die Erfindung betrifft eine Vorrichtung zum Durchführen von Kanalarbeiten nach dem Oberbegriff von Anspruch 1.

Kanalrohre bedürfen der Wartung und Pflege, da sie insbesondere an Kanalanschlüssen und Kanalverzweigungen häufig schadhaft werden. Hauptsächlich durch Setzerscheinungen oder Geländeabsenkung treten Risse oder größere Defekte auf; auch korrosive bzw. erosive Bestandteile der Abwässer verursachen Schadstellen. Durch diese Schadstellen können gefährliche Abwässer in unkontrolliert großen Mengen ins Erdreich einsickern und eine große Gefahr für das Grundwasser und somit für das Trinkwasser darstellen. Außerdem können Ablagerungen den hydraulischen Querschnitt verengen und zum einem Verschluß und Rückstau des Abwassers führen. Daher sind Schäden möglichst bald festzustellen und zu beheben.

Die erforderlichen Kanalarbeiten sind besonders schwierig bei Kanälen, die nicht begehbar sind. Um aufwendige Erd- und Straßenbauarbeiten zu vermeiden, werden hierfür Kanalroboter eingesetzt, die Geräte zum Inspizieren und Reparieren der Kanäle tragen. Sie werden in der Regel von einem Servicefahrzeug an einem entfernten Standort bedient und gesteuert und besitzen einen in einem Hauptkanal verfahrbaren Wagen, an dem ein mindestens in einer Achse verstellbarer Geräteträger angebracht ist. Es können je nach Ausstattung mehrere translatorische und rotatorische Achsen vorgesehen werden.

Aus der GB 2 147 682 A ist eine gattungsgemäße Vorrichtung mit einem Wagen und einem Geräteträger bekannt, an dem verschiedene Werkzeuge angebracht werden können. Die Vorrichtung dient vor allem zum Anschließen und Abdichten eines Nebenkanals an der Verbindung zum Hauptkanal. Die Werkzeuge können dabei nur eine sehr geringe Strecke in den Nebenkanal eindringen. Als Werkzeuge können eine Greifzange, ein rotierendes Schneidwerkzeug, ein aufblasbares, elastisches Schalungselement zum Einbringen dünnflüssigen Mörtels oder zum Setzen eines partiellen Inliners und eine Sprühvorrichtung zum Aufbringen einer Schutzschicht eingesetzt werden.

Ferner ist aus der DE 86 01 923 U1 eine Vorrichtung zum Behandeln unterirdisch verlegter Kanalrohre bekannt, die ein selbstfahrendes Fahrzeug mit einem Behandlungswerkzeug besitzt. Ein Gelenkarm ermöglicht es, das Werkzeug in fünf Freiheitsgraden zu bewegen, so daß es nicht nur an die zu reparierende Stelle gefahren, sondern auch in die erforderliche Winkelstellung gebracht werden kann. Durch einen Schlauch wird dem Behandlungswerkzeug flüssiges Beschichtungsmaterial zugeführt. Die Koordinierung und Steuerung der Antriebsvorrichtungen kann manuell oder durch eine Computersteuerung erfolgen. Der Zustand der Kanalwand kann mit einer Fernsehkamera beobachtet werden. Trotz der fünf Bewegungsachsen ist das Werkzeug nur in der Lage, im Mündungsbereich von Nebenkanälen zu agieren.

Die DE 42 07 038 C2 zeigt einen Packer zum Auskleiden des Übergangsbereichs zwischen einem Hauptkanal und einem einmündenden Nebenkanal. Ein aufweitbarer Gummimantel umgibt ein Tragrohr, mit dem er an den Enden fest verbunden ist. Das Tragrohr besitzt im mittleren Bereich eine Öffnung, in die ein mit dem Gummimantel verbundener, bzw. einstückig ausgebildeter Zylinder eingestülpt werden kann. Der Packer wird zunächst zum Nebenkanal ausgerichtet. Anschließend wird der dicht abgeschlossene Innenraum des Tragrohrs mit Druck beaufschlagt, wodurch sich der Zylinder in den Nebenkanal ausstülpt und mit dem Gummimantel an die entsprechende Innenwand des Hauptkanals bzw. des Nebenkanals anlegt. Im Übergangsbereich zwischen dem Gummimantel und dem Zylinder sind Einführungsöffnungen für eine Vergussmasse vorgesehen, die durch Leitungen von der Stirnseite des Packers aus zugeführt wird.

Aus der DE 44 01 758 C1 ist ein selbstfahrendes Fahrzeug zur Fernsehinspektion der Abzweigleitungen von einem in einem Erdreich verlegten Sammelkanal bekannt. Das Fahrzeug hat eine in einem flexiblen Führungschlauch laufende Schiebestange. Das eine Ende des Führungsschlauchs ist am Kamerahalter angebracht, während sein anderes Ende am Fahrzeug in einer Bohrung frei verschieblich gelagert ist. Die Führung für die Schiebestange garantiert stets einen großen Biegeradius beim Einfahren in die Abzweigleitung an der Schiebestange, sodass größere mechanische Belastungen an der Biegestange vermieden werden.

Aus der DE 44 17 428 C1 ist schließlich eine Einrichtung zum Vorschub eines Prüf- oder Bearbeitungssystems in einer Rohrleitung bekannt. Die Einrichtung besitzt ein von außerhalb der Rohrleitung antreibbares hohles Vorschubelement mit einem drucksteifen Mantel, der einen spiralförmig aufgewickelten Draht enthält, z.B. eine zylindrische Schraubenfeder. Zum Antreiben des Vorschubelements ist ein Antriebssystem vorgesehen, das ein in den spiralförmig aufgewickelten Draht eingreifendes Zahnrad enthält. Die Einrichtung arbeitet ohne verfahrbaren Wagen, sodass sie sowohl in Rohren mit kleinem Durchmesser als auch in Rohren mit großen Durchmesser eingesetzt werden kann, wobei sie Krümmungen folgen und Hindernissen ausweichen kann.

Der Erfindung liegt die Aufgabe zugrunde, Kanalarbeiten an Stellen durchzuführen, die vom Wagen der Vorrichtung entfernt liegen, insbesondere vom Hauptkanal weiter entfernt in einem Nebenkanal. Diese Aufgabe wird gemäß der Erfindung durch die Merkmale des Anspruchs 1 gelöst.

Nach der Erfindung gemäß Anspruch 1 ist das Werkzeug über eine Schraubenfeder, die durch eine Gewindehülse angetrieben wird, mit dem Geräteträger verbunden.

Das Werkzeu wird über den Geräteträger hinaus mittels der Fördereinrichtung, d.h. der Gewindehülse, gefördert. Dadurch kann das Werkzeug über eine erhebliche Strecke von vielen Metern vom Wagen aus in den Hauptkanal oder Nebenkanal vorgetrieben werden. Es kann dabei Krümmungen folgen und Verengungen überwinden, die der Wagen nicht oder nur schwer passieren kann.

Die Schraubenfeder wird außen am Geräteträger und/oder am Wagen geführt. Im Übrigen wird sie im Hauptkanal abgelegt. Dadurch ist sie leicht zugänglich und kann einfach gereinigt und gewartet werden. In der Rastposition des Werkzeugs wird sie ein wenig vorgespannt, sodass auch bei Erschütterungen der Kontakt zum Geräteträger nicht verloren geht. Die Vorspannung kann bei abgeschaltetem Antrieb der Gewindehülse gehalten werden, indem die Gewindehülse selbsthemmend ausgebildet ist oder durch einen Verriegelungsmechanismus blockiert ist, z.B. einem Riegelmagneten. Der Riegel ist zweckmäßigerweise durch eine Feder belastet und wird durch einen Elektromagneten entsperrt, der jedes Mal dann aktiviert wird, wenn der Antriebsmotor der Gewindehülse betätigt wird. Der Riegelmagnet kann an beliebiger Stelle des Antriebs der Gewindehülse angreifen. Zweckmäßigerweise greift er unmittelbar in die Verzahnung des Zahnrades der Gewindehülse ein. Durch die Verriegelungsmaßnahmen, die auch im Zusammenhang mit anderen biegsamen Hülsen vorgesehen werden können, kann das Werkzeug im Übrigen in jeder Position in Längsrichtung gesichert werden

Wenn das Werkzeug in einen Nebenkanal gefahren wird, richtet man zunächst den Wagen und den Geräteträger auf den Nebenkanal aus, bevor das Werkzeug durch die Schraubenfeder weiter in den Nebenkanal geschoben wird.

Das Werkzeug und/oder ein mit ihm verbundener Werkzeugträger sind zweckmäßigerweise über Versorgungs- und Steuerleitungen mit einem Servicefahrzeug verbunden, das an einem entfernten Standort außerhalb des Kanals abgestellt ist. Bei günstigen Verhältnissen kann die Steuerung auch drahtlos per Funk und die Energieversorgung über elektrische Batterien oder Druckspeicher erfolgen. Aus Platzgründen sind die Versorgungs- und Steuerleitungen vorteilhaft in der biegsamen Hülse untergebracht. Diese schützt sie gegen Beschädigung.

Um die Schraubenfeder mit dem Werkzeug bequem in den Seitenkanal einführen zu können, besitzt der Geräteträger eine schwenkbare Führung, die die Schraubenfeder auf die Richtung des Seitenkanals einstellt. Diese Führung besitzt einen Führungskanal, der an seinen Enden trichterförmig erweitert ist, damit die Schraubenfeder leicht in den Führungskanal einlaufen kann.

Die schwenkbare Führung bzw. der Geräteträger weist an ihrem dem Werkzeug zugewandten Ende eine Zentriereinrichtung auf, die mit einer Zentriereinrichtung am Werkzeug oder am Werkzeugträger zusammenwirkt. In der eingefahrenen Endposition wird das Werkzeug bzw. der Werkzeugträger in den Führungen gehalten, wobei die Schraubenfeder weitgehend von Querkräften entlastet ist. Somit kann das Werkzeug am Wagen sicher durch den Hauptkanal transportiert werden.

In der Beschreibung sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen nach den Folgenden Ansprüchen zusammenfassen.

In der Zeichnung sind Ausführungsbeispiele der Erfindung dargestellt.

Es zeigen:
Fig. 1 eine schematische Darstellung einer Vorrichtung, die nicht im Rahmen der Erfindung liegt, während ihrer Bewegung in einem Hauptkanal,
Fig. 2 eine erfindungsgemäße Vorrichtung gemäß, einer Variante zu Fig. 1 mit der Schraubenfeder,
Fig. 3 eine schematische Darstellung einer erfindungsgemäßen Vorrichtung während des Einbringens des Werkzeugs in einen Nebenkanal,
Fig. 4 eine schematische Darstellung eines Packers für das Setzen eines partiellen Inliners,
Fig. 5 eine schematische Darstellung eines Geräts zum Verpressen von Füllwerkstoff und
Fig. 6 eine schematische Darstellung eines Fräsers an einem Werkzeugträger.

In einen Hauptkanal 1 ist eine Vorrichtung eingebracht, die einen Wagen 3 besitzt. An diesem ist über eine Parallelführung 5 ein Geräteträger 4 angelenkt, mit dem eine schwenkbare Führung 10 für eine biegsame Hülse 6 verbunden ist. Diese ist durch eine Fördereinrichtung in Form von angetriebenen Transportrollen 33, die im Geräteträger 4 untergebracht sind, gegenüber dem Wagen 3 verschiebbar.

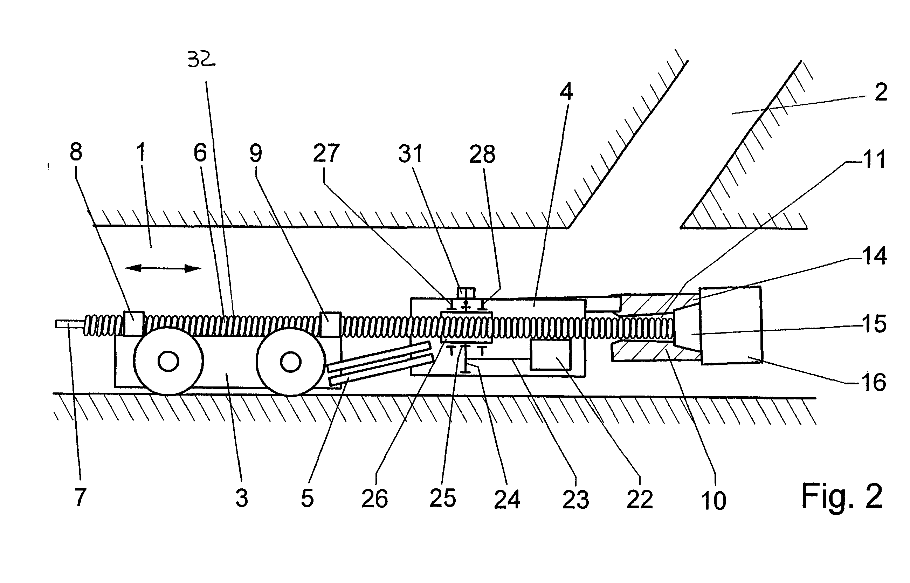

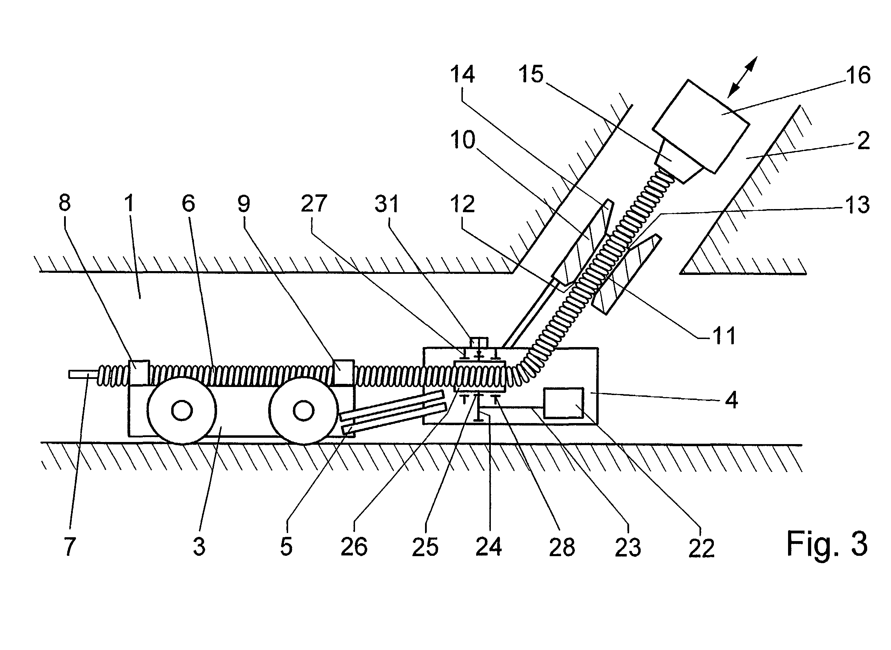

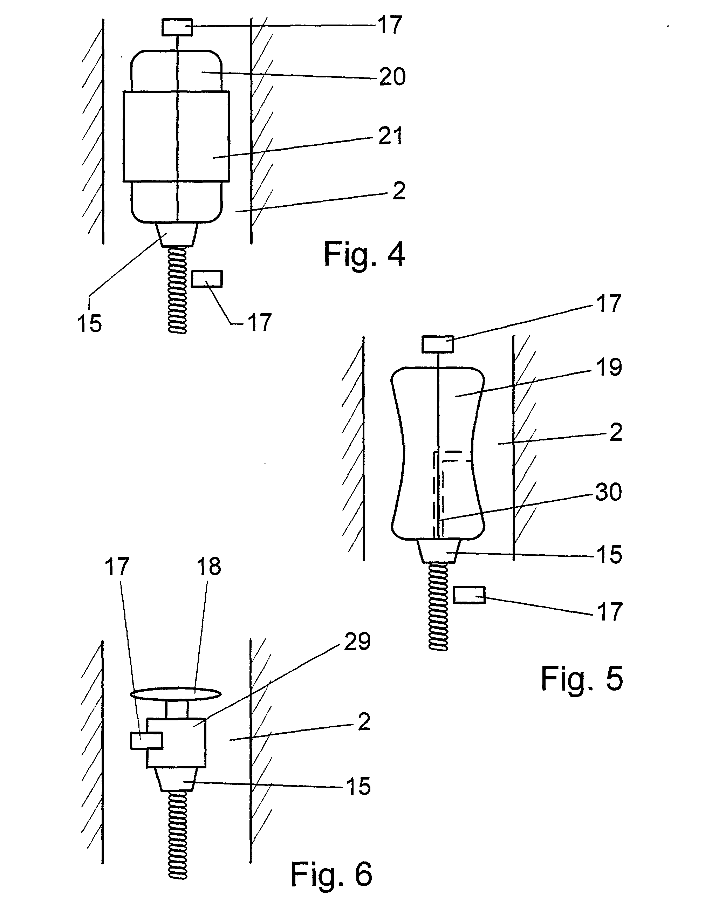

Die biegsame Hülse 6 ist erfindungsgemäß als Schraubenfeder 32 ausgebildet (Fig. 2) und trägt am Ende ein Werkzeug 16, z.B. einen Werkzeugträger 29 mit einem Fräser 18 (Fig. 5), ein Gerät 19 zum Verpressen von Füllwerkstoff mit einer Materialzuführung 30 (Fig. 4), oder einen Packer 20 zum Setzen eines partiellen Inliners 21 (Fig. 3).

Die Schraubenfeder 32, die in Längsrichtung am Wagen 3 mittels Längsführungen 8 und 9 gehalten ist, wird durch eine Gewindehülse 26 in Längsrichtung bewegt, indem die Gewindehülse 26 mit ihrem Innengewinde in die gewindeförmige Außenkontur der Schraubenfeder 6 eingreift. Die Gewindehülse 26 ist mittels Lager 27, 28 drehbar im Gehäuse des Geräteträgers 4 gelagert und wird von einem Motor 22 über eine Motorwelle 23, ein darauf sitzendes Ritzel 24 und ein mit der Gewindehülse 26 drehfest verbundenes Zahnrad 25 angetrieben. Der Motor 22 kann elektrisch, pneumatisch oder hydraulisch betrieben werden.

Zum Blockieren der Gewindehülse 26 ist ein Riegelmagnet 31 vorgesehen, der in die Verzahnung des Zahnrads 25 eingreift. Anstelle des dargestellten Stirnradgetriebes können auch andere bewährte Getriebetypen verwendet werden, z.B. Kegelradgetriebe oder Schneckengetriebe. Das Werkzeug 16 ist über Versorgungs- und Steuerleitungen 7 mit einem nicht näher dargestellten Servicefahrzeug außerhalb des Hauptkanals 1 verbunden. Die Versorgungs- und Steuerleitungen 7 sind innerhalb der Schraubenfeder 6 verlegt und somit weitgehend gegen Beschädigungen geschützt.

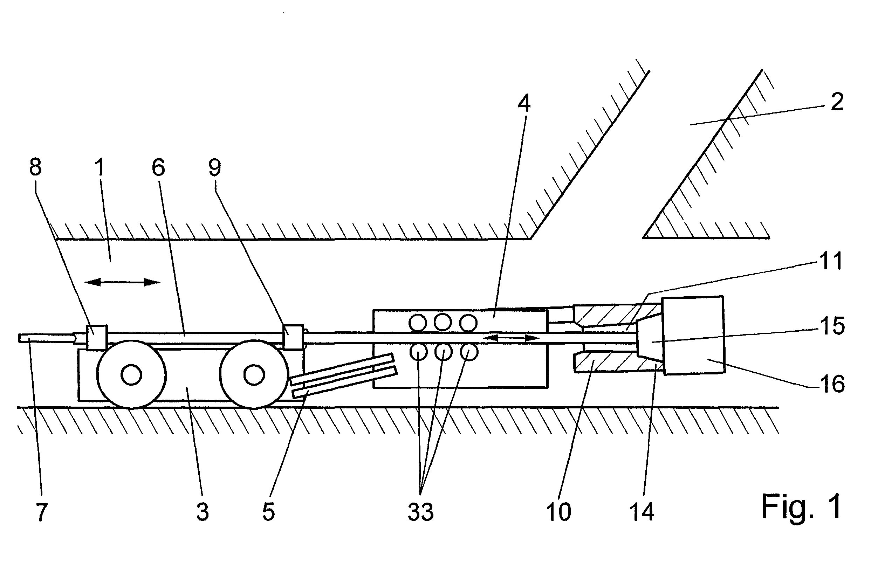

In der in Fig. 1 und 2 dargestellten Transportstellung des Werkzeugs 16 sitzt dieses mit einer Zentriereinrichtung 15 in einer entsprechenden Zentriereinrichtung 14 der schwenkbaren Führung 10. Die beiden Zentriereinrichtungen 14 und 15 werden durch eine Vorspannung der Schraubenfeder 32 gegeneinander gepreßt (Fig. 2), so daß die Schraubenfeder 32 während des Transports des Werkzeugs 16 durch den Wagen 3 von Querkräften entlastet ist. Ferner ist das Werkzeug 16 selbst sicher mit dem Wagen 3 verbunden.

Von dem Hauptkanal 1 zweigt ein Nebenkanal 2 ab. Soll das Werkzeug 16 in den Nebenkanal 2 eingefahren werden, wird zunächst der Wagen 3 und der Geräteträger 4 im Hauptkanal 1 auf den Nebenkanal 2 eingestellt. Hierzu können Fernsehkameras 17 dienen, die am Geräteträger 4 und/oder am Werkzeugträger 29 oder dem Werkzeug 16, 19, 20 angebracht sind. Anstelle der Fernsehkameras oder zusätzlich zu diesen können Sensoren vorgesehen werden, die nach verschiedenen Prinzipien arbeiten, z.B. mit Ultraschall, Laser, Radar, elektromagnetischen oder elektrischen Feldern usw. Die Fernsehkameras und Sensoren können, soweit sie mit dem Werkzeug 16 verbunden sind, später ebenfalls zur Inspektion des Nebenkanals 2 und zum Positionieren des Werkzeugs 16 dienen.

Nachdem der Wagen und der Geräteträger zum Nebenkanal ausgerichtet sind, schwenkt die Führung 10 in Richtung des Nebenkanals 2, so daß bei einer Längsverschiebung der biegsamen Hülse 6 durch die Transportrollen 33 bzw. der erfindungsgemäßen Schraubenfeder 32 durch die Gewindehülse 26 das Werkzeug 16 in den Nebenkanal 2 vorgetrieben wird. Die biegsame Hülse 6 bzw. die erfindungsgemäße Schraübenfeder 32 wird dabei in einem Führungskanal 11 der schwenkbaren Führung 10 in Richtung des Nebenkanals 2 geführt. Der Führungskanal 11 weist an seinen Enden trichterförmige Erweiterungen 12 und 13 auf, durch die die biegsame Hülse 6 bzw. die erfindungsgemäße Schraubenfeder 32 leicht in den Führungskanal 11 einläuft.

Durch die erfindungsgemäße Vorrichtung kann das Werkzeug 16 sehr weit in den Nebenkanal 2 vorgetrieben werden, d.h. über zehn Meter. Es kann dabei Krümmungen im Nebenkanal 2 folgen und Verengungen überwinden. Erreicht das Werkzeug 16 den Einsatzort, kann es durch die biegsame Hülse 6 bzw. die erfindungsgemäße Schraubenfeder 6 in Längsrichtung gesichert werden. Falls es erforderlich ist, können zusätzlich am Werkzeugträger 29 oder am Werkzeug 16 selbst nicht näher dargestellte Spreizvorrichtungen vorgesehen werden, die das Werkzeug 16 an den Wänden des Nebenkanals 2 abstützen.

## Patentansprüche

1. Vorrichtung zum Durchführen von Kanalarbeiten, die von einem entfernten Standort ansteuerbar ist und einen in einem Hauptkanal (1) verfahrbaren Wagen (3) hat, an dem ein mindestens in einer Achse verfahrbarer Geräteträger (4) mit einem Werkzeug (16) angelenkt ist, **dadurch gekennzeichnet, dass** das Werkzeug (16) über eine Schraubenfeder (32) mit dem Geräteträger (4) verbunden ist, die am Geräteträger (4) oder Wagen (3) in einer drehbar antreibbaren Gewindehülse (26) geführt und durch die Gewindehülse (26) zusammen mit dem Werkzeug (16) über den Geräteträger (4) hinaus verstellbar ist.

2. Vorrichtung nach Anspruch 1, **dadurch gekennzeichnet, dass** die Gewindehülse (26) selbsthemmend ausgelegt ist.

3. Vorrichtung nach Anspruch 1, **dadurch gekennzeichnet, dass** die Gewindehülse (26) bei abgeschaltetem Antrieb blokkiert werden kann.

4. Vorrichtung nach Anspruch 3, **dadurch gekennzeichnet, dass** ein Riegelmagnet (31) in die Verzahnung eines Zahnrads (25) oder eines Ritzels (24) eingreift, über die die Gewindehülse (26) angetrieben wird.

5. Vorrichtung nach einem der vorhergehenden Ansprüche, **dadurch gekennzeichnet, dass** vom Standort bis zum Werkzeug (16) Versorgungs- und Steuerleitungen (7) führen, die in der Schraubenfeder (32) untergebracht sind.

6. Vorrichtung nach einem der vorhergehenden Ansprüche, **dadurch gekennzeichnet, dass** die Schraubenfeder außen am Gehäuse des Wagens (3) und/oder des Geräteträgers (4) geführt ist.

7. Vorrichtung nach einem der vorhergehenden Ansprüche, **dadurch gekennzeichnet, dass** an dem Geräteträger (4) eine schwenkbare Führung (10) für die Schraubenfeder (32) angeordnet ist.

8. Vorrichtung nach dem Anspruch 7, **dadurch gekennzeichnet, dass** die schwenkbare Führung (10) einen Führungskanal (11) mit trichterförmigen Erweiterungen (12, 13) an seinen Enden für die Schraubenfeder (32) besitzt.

9. Vorrichtung nach einem der Ansprüche 7 oder 8, **dadurch gekennzeichnet, dass** die schwenkbare Führung (10) an ihrem dem Werkzeug (16) zugewandten Ende eine Zentriereinrichtung (14) aufweist, die mit einer Zentriereinrichtung (15) am Werkzeug (16) oder einem Werkzeugträger (29) zusammenwirkt.

10. Vorrichtung nach einem der vorhergehenden Ansprüche, **dadurch gekennzeichnet, dass** am Werkzeugträger (29) und/oder Werkzeug (16) eine Fernsehkamera (17) und/oder Sensoren zum Positionieren des Werkzeugs (16) angeordnet sind.

11. Vorrichtung nach einem der vorhergehenden Ansprüche, **dadurch gekennzeichnet, dass** das Werkzeug (16) ein Fräser (18), oder ein Gerät (19) zum Verpressen von Füllwerkstoff oder ein Packer (20) für einen partiellen Inliner (21) ist.

## Claims

1. A device for the execution of sewer works, which can be controlled from a remote location and has a trolley (3) traversable in a main sewer (1), to which traversable trolley there is coupled an appliance carrier (4) with a tool (16) traversable at least in one axis, **characterised in that** the tool (16) is connected with the appliance carrier (4) via a helical spring (32), which is guided on the appliance carrier (4) or trolley (3) in a rotatably drivable threaded sleeve (26) and which can be displaced through the threaded sleeve (26) together with the tool (16) beyond the appliance carrier (4).

2. The device according to claim 1, **characterised in that** the threaded sleeve (26) is designed self-locking.

3. The device according to claim 1, **characterised in that** the threaded sleeve (26) can be blocked when the drive is switched off.

4. The device according to claim 3, **characterised in that** a bolt magnet (31) engages in the toothing of a toothed wheel (25) or a pinion gear (24), via which toothing the threaded sleeve (26) is driven.

5. The device according to any one of the preceding claims, **characterised in that** supply and control lines (7), which are housed in the helical screw (32), lead from the location to the tool (16).

6. The device according to any one of the preceding claims, **characterised in that** the helical screw (32) is run externally on the housing of the trolley (3) and/or of the appliance carrier (4).

7. The device according to any one of the preceding claims, **characterised in that** a swivelling guide (10) for the helical screw (32) is arranged on the appliance carrier (4).

8. The device according to claim 7, **characterised in that** the swivelling guide (10) has a guide channel (11) with funnel-shaped extensions (12, 13) on its ends for the helical screw (32).

9. The device according to any one of claims 7 or 8, **characterised in that** the swivelling guide (10) has on its end facing the tool (16) a centering device (14), which cooperates with a centering device (15) on the tool (16) or a tool carrier (29).

10. The device according to any one of the preceding claims, **characterised in that** a television camera (17) and/or sensors for the positioning of the tool (16) are arranged on the tool carrier (29) and/or tool (16).

11. The device according to any one of the preceding claims, **characterised in that** the tool (16) is a milling cutter (18), or a device (19) for the compaction of filler material or a packer (20) for a partial inliner (21).

## Revendications

1. Dispositif pour l'exécution de travaux de canalisation, qui peut être commandé à partir d'un site éloigné et présente un chariot (3) déplaçable dans un canal principal (1), sur lequel un support d'appareils (4) déplaçable au moins dans un axe est articulé avec un outil (16), **caractérisé en ce que** l'outil (16) est relié par un ressort hélicoïdal (32) au support d'appareils (4), lequel ressort est guidé sur le support d'appareils (4) ou le chariot (3) dans une douille filetée (26) pouvant être entraînée par rotation et peut être déplacé par la douille filetée (26) en même temps que l'outil (16) au-delà du support d'appareils (4).

2. Dispositif selon la revendication 1, **caractérisé en ce que** la douille filetée (26) est conçue de façon autobloquante.

3. Dispositif selon la revendication 1, **caractérisé en ce que** la douille filetée (26) peut être bloquée dans le cas d'un entraînement déconnecté.

4. Dispositif selon la revendication 3, **caractérisé en ce qu'**un aimant à verrou (31) s'engage dans la denture d'une roue dentée (25) ou d'un pignon (24), par laquelle la douille filetée (16) est entraînée.

5. Dispositif selon l'une quelconque des revendications précédentes, **caractérisé en ce que** des conduites d'alimentation et de commande (7), qui sont logées dans le ressort hélicoïdal (32), vont du site jusqu'à l'outil (16).

6. Dispositif selon l'une quelconque des revendications précédentes, **caractérisé en ce que** le ressort hélicoïdal est guidé à l'extérieur sur le carter du chariot (3) et/ou du support d'appareils (4).

7. Dispositif selon l'une quelconque des revendications précédentes, **caractérisé en ce qu'**un guide (10) pivotant pour le ressort hélicoïdal (32) est disposé sur le support d'appareils (4).

8. Dispositif selon la revendication 7, **caractérisé en ce que** le guide (10) pivotant présente un canal de guidage (11) avec des élargissements (12, 13) en forme d'entonnoir sur ses extrémités pour le ressort hélicoïdal (32).

9. Dispositif selon l'une quelconque des revendications 7 ou 8, **caractérisé en ce que** le guide (10) pivotant présente sur son extrémité tournée vers l'outil (16) un système de centrage (14) qui agit conjointement avec un système de centrage (15) sur l'outil (16) ou un support d'outil (29).

10. Dispositif selon l'une quelconque des revendications précédentes, **caractérisé en ce qu'**une caméra de télévision (17) et/ou des capteurs pour le positionnement de l'outil (16) sont disposés sur le support d'outil (29) et/ou l'outil (16).

11. Dispositif selon l'une quelconque des revendications précédentes, **caractérisé en ce que** l'outil (16) est une fraise (18) ou un appareil (19) pour la compression de matériau de charge ou un packer (20) pour un inliner (21) partiel.
